# FASCICULE DE BREVET EUROPEEN

(11) **EP 0 497 705 B1**
(45) Date de publication et mention de la délivrance du brevet: **08.03.1995**
(21) Numéro de dépôt: 92400255.3
(22) Date de dépôt: 31.01.1992
(51) Int. Cl.: B60N 2/48

(54) **Appui-tête réglable à commande électrique pour siège de véhicule automobile**
Elektrisch bedienbare Kopfstütze für Kraftfahrzeugsitz
Electrically controllable headrest for car seat

(30) Priorité: 01.02.1991 FR 9101144
(43) Date de publication de la demande: 05.08.1992
(73) Titulaire: REGIE NATIONALE DES USINES RENAULT S.A., 92109 Boulogne Billancourt Cédex (FR)
(72) Inventeur: Laporte, Alain, F-78280 Guyancourt (FR); Golinelli, Mathieu, F-92110 Clichy (FR)
(74) Mandataire: Ernst-Schonberg, Michel

(56) Documents cités:
- FR-A- 2 395 166
- FR-A- 2 440 712
- GB-A- 2 234 167

## Description

L'invention concerne un appui-tête réglable à commande électrique pour siège de véhicule automobile dans lequel une structure interne est articulée sur un support fixé à l'armature du siège et dans lequel un moteur logé dans l'appui-tête porte un pignon d'entrainement en contact d'engrènement avec un pignon d'actionnement d'un moyen de réglage. Un tel appui-tête est connu du document GB-A- 2 234 167.

La publication US-A-3.592.508 décrit un montage dans lequel le moteur électrique commande le mouvement de déplacement vertical de l'appui-tête. Il est ainsi possible de modifier la hauteur de l'appui-tête mais sans toutefois faire varier sa position angulaire.

Pour remédier à cet inconvénient la publication FR-A-2.377.898 propose un appui-tête dont le blocage angulaire résulte d'un contact entre surfaces coopérantes mais qui est insuffisant en cas de choc brutal de la tête.

L'invention vise un appui-tête qui ne présente pas les inconvénients des appuis-tête connus, c'est-à-dire dans lequel la modification de la position angulaire s'effectue de façon simple et commode, et qui conserve sa position même en cas de choc.

Selon l'invention, le moyen de réglage de la position angulaire de l'appui-tête est agencé sur le support fixé à l'armature du siège et se déplace transversalement entre deux branches dudit support, devant un élément transversal de la structure interne de l'appui-tête, sur lequel ledit moyen de réglage exerce un effort de poussée orthogonal à son sens de déplacement.

Selon un aspect de l'invention, le moyen de réglage est constitué par un système vis-écrou, dans lequel l'écrou est guidé le long du support et prend appui sur une rampe de poussée transversale dont une extrémité est accolée et l'autre extrémité est écartée des montants de la structure interne de l'appui-tête.

L'utilisation du système vis-écrou permet un réglage très simple puisqu'il suffit de faire tourner la vis pour obtenir la position angulaire désirée. En outre, un tel système fixe la position d'une façon parfaitement stable vis à vis des chocs appliqués sur la matelassure de l'appui-tête.

D'autres caractéristiques et avantages de l'invention apparaitront à la lecture de la description d'un exemple de réalisation de l'appui-tête en référence au dessin annexé dans lequel :
- la figure 1 est une vue latérale d'un siège disposé dans un véhicule, équipé d'un appui-tête réglable conforme à l'invention,
- la figure 2 est une représentation perspective de la structure interne de l'appui-tête,

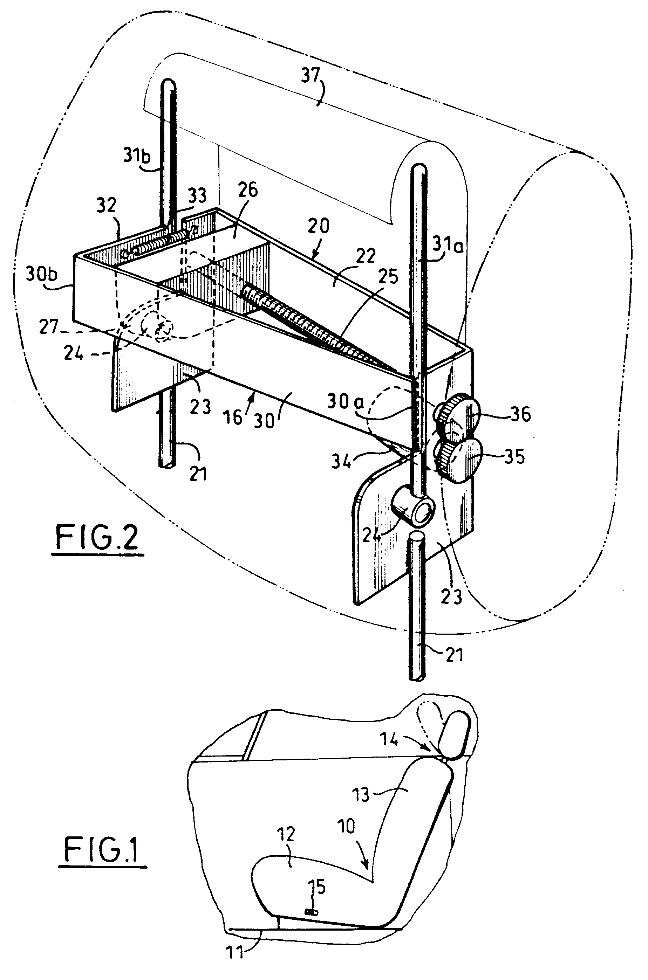

En référence à la figure 1, le siège 10 est monté sur le plancher 11 d'un habitacle de véhicule automobile. Le siège 10 est constitué par une assise 12 dont le soubassement est fixé au plancher 11 et par un dossier 13 dont l'armature porte l'appui-tête réglable 14 à commande électrique à partir d'un boitier 15.

La figure 2 montre la structure interne 16 de l'appui-tête articulée sur un support 20 fixé à l'armature du dossier 13. Le support 20 porte ainsi que cela est montré à la figure 2 deux pieds sensiblement verticaux 21 encastrés par exemple dans des douilles solidaires d'une traverse non représentée de haut du dossier 13.

Les pieds 21 sont de la sorte entretoisés par le support 20. Le support 20 est conformé en une traverse 22 dont les flancs repliés constituent deux branches 23 latérales. Les branches 23 sont soudées aux pieds 21 et portent l'axe d'articulation 24 de la structure 16 sur le support 20.

La partie supérieure des branches 23 porte le moyen de réglage des déplacements angulaires de l'appui-tête. Le moyen de réglage est constitué par une vis 25 dont les extrémités sont respectivement supportées par les branches 23. Sur la vis est monté un écrou 26 guidé le long de la traverse 22 et ledit écrou 26 possède une zone d'appui 27 en appui sur une rampe de poussée 30 disposée transversalement dans la structure 16.

Une extrémité 30 a de la rampe de poussée 30 est soudée à un montant 31a de la structure 16. L'autre extrémité 30b de la rampe 30 porte un bord plié 32 et permet une liaison soudée avec le deuxième montant 31b de la structure 16, avec un écartement longitudinal adapté à la réalisation d'une rampe de poussée qui commande l'inclinaison de l'appui-tête autour de l'axe 24 sous l'action d'un déplacement de l'écrou 26. Un ressort de rappel 33 dont les extrémités sont respectivement accrochées sur la structure 16 et sur le support 20 assure le rappel de la rampe 30 au contact de la zone d'appui 27 de l'écrou 26 au cours des déplacements de l'écrou et par voie de conséquence le rappel de la structure 16 lorsque l'écrou 26 se déplace dans le sens opposé à celui de l'action d'appui (vers la gauche de la figure).

Ainsi que cela est montré sur la figure, un moteur électrique 34 à deux sens de rotation est logé dans l'appui-tête 14 et est fixé sur une branche 23 du support 20.

L'arbre du moteur 34 s'étend au travers de la paroi du support 20 et porte un pignon d'entrainement 35 en contact d'engrènement avec un pignon d'actionnement 36 de la vis 25 du système vis-écrou.

L'ensemble de la structure 16 et du support 20 est monté dans un logement formé dans l'armature interne 37 de montage du coussin support de l'appui-tête dans le but d'autoriser tous les déplacements angulaires nécessaires relatifs de la structure 16 par rapport au support 20.

Il est clair, à la lumière de la description que la rotation du moteur 34 déplacera l'écrou 26 et par voie de conséquence l'appui-tête 14 autour de l'axe 24.

L'alimentation du moteur 34 à partir du boitier 15 fait intervenir de manière en soi connue, des connecteurs utilisant la conductibilité électrique des éléments du siège et des conducteurs filaires dissimulés dans des boitiers fixés au siège dans le but de permettre le démontage rapide de l'appui-tête.

L'appui-tête sera avantageusement piloté à partir d'une mémoire électronique qui reçoit les signaux délivrés par un capteur de position placé dans l'appui-tête.

## Revendications

1. Appui-tête réglable à commande électrique pour siège de véhicule automobile dans lequel une structure interne (16) est articulée sur un support (20) fixé à l'armature du siège et dans lequel un moteur (34) logé dans l'appui-tête (14) porte un pignon d'entrainement (35) en contact d'engrènement avec un pignon d'actionnement (36) d'un moyen de réglage (25, 26),
caractérisé par le fait que le moyen de réglage est agencé sur le support (20) et se déplace transversalement entre deux branches (23) dudit support, devant un élément transversal (30) de la structure interne (16) sur lequel le dit système de réglage exerce un effort de poussée orthogonal à son sens de déplacement.

2. Appui-tête selon la revendication 1, caractérisé par le fait que le moyen de réglage est constitué par un système vis-écrou (25, 26) dans lequel l'écrou (26) est guidé le long du support (20) et prend appui sur une rampe de poussée (30) transversale dont les deux extrémités sont respectivement accolée et écartée de montants (31a, 31b) de la structure.

3. Appui-tête selon la revendication 2, caractérisé par le fait que le support (20) et la structure (16) portent respectivement les ancrages d'un ressort de rappel (33) de la structure (16) en contact d'appui sur l'écrou (26).

## Claims

1. An electrically controllable adjustable headrest for a motor vehicle seat in which an interanal structure (16) is pivotally mounted on a support (20) fixed to the framework of the seat and in which a motor (34) accommodated in the headrest (14) carries a drive pinion (35) in meshing control with an actuating pinion (36) of an adjusting means (25, 26), characterised in that the adjusting means is disposed on the support (20) and is displaced transversely between two arms (23) of said support, in front of a transverse element (30) of the internal structure (16), to which said adjusting system applies a thrust force which is orthogonal to its direction of displacement.

2. A headrest according to claim 1 characterised in that the adjusting means is formed by a screw-nut system (25, 26) in which the nut (26) is guided along the support, (20) and bears against a transverse-thrust ramp means (30) of which the two ends are respectively, joined to and spaced from uprights (31a, 31b) of the structure.

3. A headrest according to claim 2 characterised in that the support (20) and the structure (16) respectively bear the anchorages for a return spring (33) for returning the structure (16) into a condition of bearing contact against the nut (26).

## Patentansprüche

1. Elektrisch steuerbare Kopfstütze für einen Kraftfahrzeugsitz, wobei ein innerer Aufbau (16) an einer Halterung (20) angelenkt ist, die am Sitzgestell befestigt ist und wobei ein in der Kopfstütze (14) angeordneter Motor (34) ein Antriebsritzel (35) trägt, welches mit einem Stellritzel (36) einer Steueranordnung (25, 26) kämmt, desgleichen die Steueranordnung an der Halterung (20) vorgesehen ist und quer verschiebbar ist zwischen zwei Armen (23) der Halterung, vor einem quer verlaufenden Teil (30) des inneren Aufbaus (16), auf das die Steueranordnung eine Druckkraft ausübt senkrecht zu ihrer Verschieberichtung.

2. Kopfstütze nach Anspruch 1, dadurch gekennzeichnet, daß die Steueranordnung aus einem System Schraube-Mutter (25, 26) besteht, wobei die Mutter (26) entlang der Halterung (20) gleitet und sich auf einer Querdruckrampe (30) abstützt, deren beide Enden an entsprechenden Stützen (31a, 31b) des Gestells befestigt bzw. beabstandet sind.

3. Kopfstütze nach Anspruch 2, dadurch gekennzeichnet, daß die Halterung (20) und der Aufbau (16) Verankerungen für eine Rückholfeder (33) für den Aufbau (16) aufweisen, die sich auf der Mutter (26) abstützt.
